Europäisches Patentamt

(19) European Patent Office

Office européen des brevets

(11) Publication number: **0 441 755 A2**

## (12) EUROPEAN PATENT APPLICATION

(21) Application number: 91830019.5

(22) Date of filing: 22.01.91

(51) Int. Cl.$^5$: **G01N 35/02**

(30) Priority: 02.02.90 IT 4759090

(43) Date of publication of application:
14.08.91 Bulletin 91/33

(84) Designated Contracting States:
AT BE CH DE DK ES FR GB GR LI NL

(71) Applicant: CHEMILA S.r.l.
Via Tiburtina Valeria Km. 18300
Setteville di Guidonia RomE (IT)

(72) Inventor: Prodosmo, Armando
Largo Russell, n.6
I-00137 Rome (IT)
Inventor: Mazzacurati, Federico
Via Dupré, n.8
I-00133 Rome (IT)

(74) Representative: Santostefano, Alfredo
c/o Studio Ing. C. Gregorj S.r.l. Via
Sallustiana1/A
I-00187 Roma (IT)

(54) **Automatic machine with electromechanical programming and electronic interlocking, able to perform clinical analyses.**

(57)    Automatic analyzing machine with electromechanical programming and electronic interlocking, able to process up to three microplates as a maximum, in a contemporary process, being programmable both with unitary analyses and multiple ones. The machine is made in three production forms of the analyzer, including a spectrephotometer for hormone kits and immunoenzymatic tuporal markers, a spectrephotometer for immunoenzymatic infectiological kits, and a fluorimeter for immunofluorescent kits.

The first manufacturing form of the machine may perform a wide range of clinical analyses of the tumoral and hormone markers.

The second manufacturing form of the machine includes a modification on the primary spreading arm, in order to start an electromechanical system taking and automatically separating an only once usable cone intended for infectiological kits, requiring a dragging value very low between one serum and the next one, including the AIDS hepatitis group and the Torch complex. The third manufacturing form includes a reading system made with laser excitation and detection by means of a fluorimeter, and can perform the same above mentioned analyses.

FIG. 2

EP 0 441 755 A2

# AUTOMATIC MACHINE WITH ELECTROMECHANICAL PROGRAMMING AND ELECTRONIC INTERLOCKING, ABLE TO PERFORM CLINICAL ANALYSES

The instant invention has as its subject an automatic analysing machine with electromechanical programming and electronic interlocking, and includes a combination of six operational modules controlled by a managing system which is installed beyond the machine. The group solves the problem to contemporarily processing up to three microplates, programmable both with unitary and multiple analyses.

From the study of the previous art in the area of the automatical analyses, one may state that the inventors and producers did try to develop and improve the automatic clinical analyses only by operating and assembling features being able to automatically perform some clinical analyses with a rather low maximum number of samples, by using separate instruments to perform different steps of the analysis and, moreover by using not standardized instruments made by the producers of the machines.

The analyzing machine being the subject of the instant invention consents the use of marked anti-bodies together with enzymes which consent to reduce the costs and to render simple and reliable the analysis methods.

Moreover, the above mentioned machine consents to develop the analysis methods on standardized supports of plastic materials, which are called hereafter microplates, with the advantage of having a complete automation, a simplified use, a reduction of the operational times and of the number of operational steps, a standardization of the methods, with reduced overall sizes and with limited costs.

The very interesting features of the analyzing machine being the subject of the invention may be listed in detail as follows in the modulat units being the equipment of the machine.

## A - IDENTIFYING MODULE OF THE SAMPLES

The module consists mainly in a round support for 90 samples in test tubes, size 75 x 12,5 mm, with pre-printed identifying labels by means of bar codes ; the support is interfaced with a step by step motor and a series of optical sensors, all controlled and managed by the central computer.

The mechanical support for the test tube is arranged on the left side of the instrument. This support has a round form ; it performs its circular passages before a laser-scanner-reader for bar codes labels. The container has a capacity of 180 places but only the 80 outside positions, i.e. the first 2 rows, can be seen by the reader ; the remaining 90 positions are utilized to perform a previous dilution (in the cases wherein this is required because of special methods) and thereafter a re-arrangement. For the fall of the infectiological kits, at the center of the round support of the test tubes, there is another support containing 135 hollow rods, size one milliliter.

## B - STACTOMETERING MODULE FOR SERUMS AND FIRST REACTANT

It consists of a robotized arm, movable in three directions (x, y, z) within an area being foreseen for the management of the samples, of the supports having had already their treatment (microplates or strips), of the specified reagents, and supporting a distributing metal needle being always full of liquid in order to always have the required precision of the minimum volumes.

This needle, between one serum and the other, or one reagent and the other, shall be subject to some inside and outside washings in a well arranged for these washings and placed on the working surface, which supports also the three microplates.

In order to have a guaranteed precision and reliability, the three movements of the plotter are interlocked with step-by-step motors, being in turn controlled in their movements by a series of optical and mechanical sensors.

Such a system performs also the functions of pre-diluting the sample according to some particular methods. An automatic liquid level survey system, of a capacity type, together with two diluting units provided with precision syringes, fulfils in a complete manner this function. The plotter is designed to consent the displacement of the foreseen sounds and probes in the whole operating area, which is proportioned for :

- placing the samples carrying container
- placing the three microplates in reaction
- placing the containers supplied with the kits
- placing a support for 10 cones having capacity 1 ml
- placing the washing head.

## C - DRYING AND INCUBATION MODULE

It is foreseen to have an insulated area arranged to place three microplates, with temperature control in the maximum space of 45°. The incubation system is controlled by means of a slave microprocessor which provides to ascertain the temperature within the incubation room, and accordingly to the proportional control, referred to the nominal working temperature of 37°C, of the heating resistances. Some particular arrangemente have been made in order to thermally insulate the incubation space from the instrument's structure.

For the third manufacturing form of the machine, on this apace a second one is provided, which is necessary for the drying function, being required for some particular methods.

## D - WASHING MODULE

The control features required and managed, automatically, by a computer, are as follows :
- Programming of the number of cycles till 5
- Programming of the volumes till 300 microlitres
- Programming of the strims number.

This function is made through a support of plastic material provided with 8 channels to dispense the washing solution and 8 channels for sucking up. The first function is interlocked with DC controlled gear pump, whereas the second one is interlocked with a vaccum pump, controlled in AC current through an optocoupler device with zero crossing. The latter is provided also with the accessory items being required for a good operation such as the antinoise device and the anti-condensate filters. The containers for the washing solution and to collect the sucked liquid are provided within the system with filling and emptying access for the containers considerably simplified. The washing head is automatically taken and managed by the second mechanical group as foreseen in the first reactant (Z axis) and serums stactometering plotter. For the third version the head supports 12 ducts, both for suction and dispensing.

## E - DISTRIBUTION MODULE FOR OTHER REACTANTS

The need not to use any metal elements (needles, valves, ducts) in the dispensing system for the above mentioned reactants, and particularly for the chromogene, causes the rejection of the dispensing system used for the serums and first reacant ; one must use on the contrary a second mechanical unit, always interlocked with the main plotter, supporting an automatic taking device for a plastic material once usable cone with 1 ml capacity, of the common trade type. This once usable cone is hydraulically connected with the second syringe diluter (5 ml), a precision tool, and fills up the one-use cone and performs several sequential dispensings of the selected reactant. At the very end it rejects automatically this cone into a pre-arranged area, it takes a second one, it fills this second one with the second reactant and continues as described above, until the programmed wells are all completed. The number of these cones as foreseen in the loading at the beginning is 10 units as a maximum. A reactant level survey system, for the reactants being present in the original containers, consents to perform the above described function in the manner as much correct as possible, in order to avoid that some too deep sinkings cause some drops outside of the above mentioned cone such as to false the precision and accuracy required.

The second mechanical unit, as already described, with support and management by the same main plotter, has the task and function of management of the wasting head too, as described before.

## G - SPECTREPHOTOMETRIC READING MODULE

The functional philosophy of the reading system is the classical one, making use of the principle of the "vertical" reading to ascertain the absorption, which is directly proportional to the concentration of the liquid to be analyzed and is used for many methods of survey for immuno-enzymatical dosings.

The hardware consists of 24 lighting channels with the relevant 24 sensors with 8 filters each, all interferential, which may be programmed by the computer ; of a mechanical system as required for the movements in order to displace the three trolleys supporting the three microplates, everything controlled by a second slave microprocessor inside. This module is entirely contained in an extractable drawer. In the third version the reading module is placed on the back of the whole apparatus.

## H - MANAGEMENT SYSTEM AND SOFTWARE

The management system consists of a professional unit being largely used, and is subdivided as follows :
- Processor 640 KRAM
- Monochromatic 6" video monitor
- Extra-falt alphanumerical keyboard
- Mass memory : 20 Mbytes on hard disk

The software is made in a Q-BASIC space, and consents to have an inter-active dialogue with the operator ; the dialogue type is a simplified one. The operator may select the type and the number of the dosages previously chosen (max. 3) ; the parameters of same are previously memorized in such a way as to simplify the operations, and to reduce the risk of possible mistakes. It gives to the operator all the information or messages concerning the operational conditions of the system and also all warnings, if any, to be taken into account during the different steps in the processing and/or at the end of performance. It performs, moreover, the following :
- the automatic management of all foreseen automatisms
- the management of the different interface buffers as foreseen in each module
- the processing, presentation, storage and printing of all results
- the supply of auxiliary calibration and autodiagnose routines of the system
- the automatic starting of the programs, by means of a system of the "turnkey" type.

The system as above described is foreseen out of the machine equipment, in order to enable an easy replacement ; these systems are namely obsolete in a very short time.

As everybody can see, in this case there are a number of new features, aiming to give to the operator the possibility to schedule and to program, and also to carry out, in a reliable way, the different operations in the area of the clinical analyses.

In order to better explain the above mentioned new features, the analyzing machine is described hereafter in connection with the attached drawings, wherein :

The figure 1 is a prospect view of the machine according to the invention ;

the figure 2 is a cross section of the item as shown in figure 1 ;

the figure 3 is a top view of the machine according to the invention ;

the figure 4 is the hydraulic diagram of the machine ;

the figure 5 is the elctric diagram of the machine.

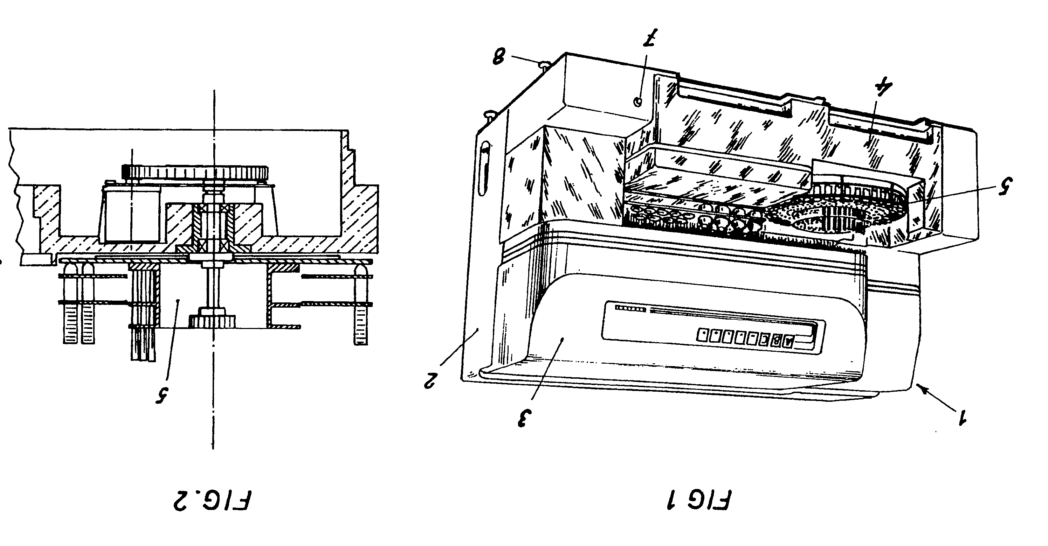

We pass now to the study of the drawings, and first of all one must remark, in the figure 1, that the analyzing machine being the subject of this invention, and bearing the reference number 1, is formed by an outside structure 2, with a cover 3 and an extractable drawer 4 which can be placed in the hollow part of the machine.

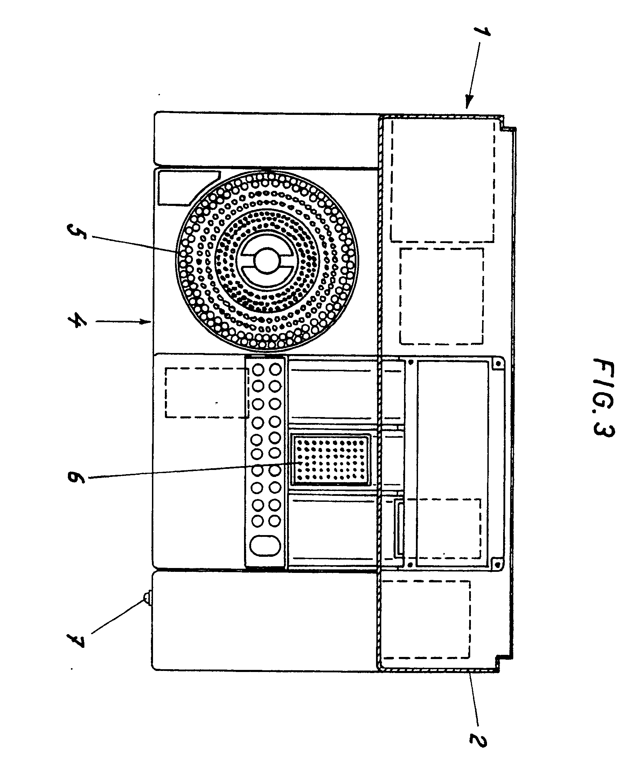

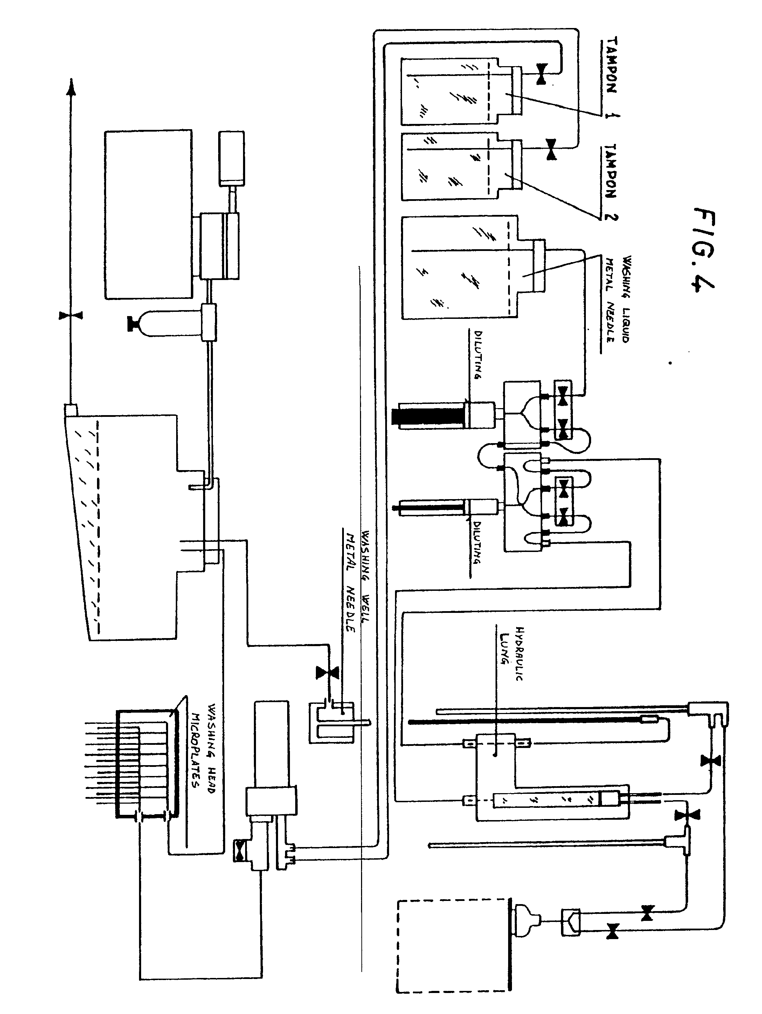

The drawer 4 is the place where the round support 5, being shown in a cross section in the figure 2, is installed, and moreover the samples for test tubes, as well as of the microplates 6 being shown in figure 3. A push-button 7 consents to release of the drawer 4 to allow to take it manually away. Adjustable supports 8 consent to arrange a horizontal positioning of the machine. As soon as the serum samples of the patients have been placed into the round support, one performs the insertion of the kits referring to the analyses to be made, as well as the loading of the tanks referring to the tampons and/or washing liquids of the microplates. As soon as one has performed the loading of the microplates, by digitizing the computer's keyboard one may insert into the management program the parameters referring to the kits to be used.

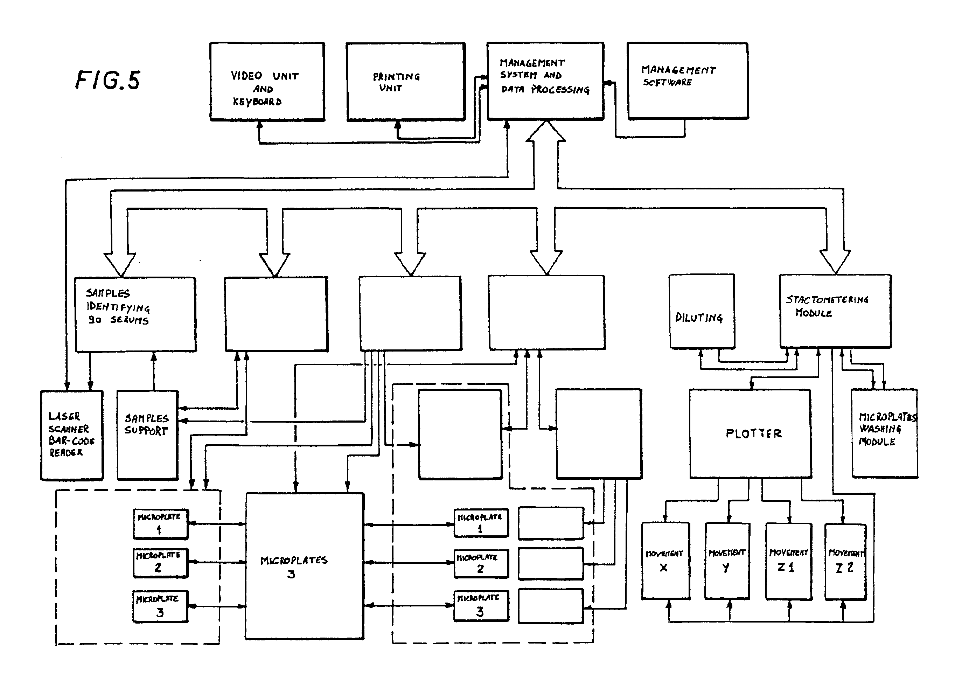

When studying the hydraulic diagram of the figure 4, one may remark that its upper part is referring to the operation of the serums stactometering modules, the first reactant and the distribution of other reactants, whereas the lower part is referring to the washing module. From the electric diagram of figure 5 one may observe very clearly the component parts of the electric interlocking in the operational steps of the machine.

## Claims

1. Automatic machine with electromechanical programming and electronic interlocking, able to perform clinical analyses, including combination of six operational modules controlled by a managing system which is installed beyond the machine, and consisting in an identifying module of the samples, in a stactometering module for serums and first reactant, in a drying and incubation module, in a washing module, in a distribution module for other reactants and in a spetrephotometric reading module, characterized by the fact that :

    a) identifying module of the samples consists of a round support turning before an automatically scanning reader of bar codes,

    b) stactometering module for the serums and first reactant is formed by a robotized arm moving into the three direction within an area being foreseen for the management of the samples, reactants, microplates, cones and washing head,

    c) washing module is formed by a support provided with 8 dispensing ducts of the washing solution, 8 sucking ducts, containers for the washing solution and to collect the sucked liquid.

2. Machine according to claim 1, characterized by the fact that circular support permits the identification of the samples, with considerable time saving, by means of the rotation of the test tubes container and by the fact that above rotation places the test tubes, from which the withdrawal is to be made, always in the same positions, thus permitting to reduce the plotter's runs and the dispensing time.

3. Automatic analyzing machine according to claim 1, characterized by the fact that the stactometering of the serums and of the first reactant is performed automatically, since to provide it there is a plotter able to move in the three directions within an area foreseen for the samples' management as well as of the processed supports, and of the reactants, which above mentioned plotter has its movement on the X axis carried out through the horizontal displacement of a trolley , which is installed on precision made bearings, and wich in turn runs on two cylindrical bars ; the above mentioned trolley is a support for the arm with reference to the displacements on the Y and Z axes ; the positioning of the Y axis is performed by means of a trolley running on bearings on two C-form guides, being installed within the mechanical arm ; said trolley, the last mentioned one, supports the two mechanical units carrying out the displacement on the Z axis, the first one being arranged to manage the dispensing needle, the second one to manage the once usable cone, and also the washing unit, wherein the movement of the latter ones is carried out on supports running on parallel bushings and rods, whereas the trasmission of all movements is performed by means of toothed belts, with nylon reinforcements and with steel core, in order to avoid any undesirable stretching, and the belts are running on a pulley splined to the driving shaft.

4. Automatic analyzing machine according to the claim 1, characterized by the fact that the duct to dispense liquid to 8 canals is made in such a way, to obtain an equal output on the above canals.

5. Analyzing machine according to claim 1, characterized by the fact that in the above mentioned distribution of other reactants, the sound has its end shaped as a cone, with a run limited by an opposed spring, in order to permit an optimum input of the cone into the once usable hollow rod thus assuring the wet seal, and a U shaped fork, into which the sound is introduced in its movement to the top in its back run, thus causing the ejection of the used hollow rod.

6. Machine according to claim 1, characterized by the fact that it includes three standardized, movable and independent microplates, being able to consent the analyses in a frame of a complete automation, simple use, with reduction of the time and of the number of passages, standardizing of the methods, reduced space requirements and reduced costs.

EP 0 441 755 A2

FIG 1

FIG. 2

EP 0 441 755 A2

FIG. 3

7

FIG. 4

FIG.5